# EUROPEAN PATENT SPECIFICATION

(11) **EP 3 535 613 B1**
(45) Date of publication and mention of the grant of the patent: **20.03.2024**
(21) Application number: 17868319.9
(22) Date of filing: 06.11.2017
(51) Int. Cl.: G02B 6/36, G02B 6/38

(54) **METHOD OF MANUFACTURING FLEXIBLE FIBER OPTIC CIRCUITS**
VERFAHREN ZUR HERSTELLUNG VON FLEXIBLEN FASEROPTISCHEN SCHALTUNGEN
PROCÉDÉ DE FABRICATION DE CIRCUITS FLEXIBLES À FIBRES OPTIQUES

(30) Priority: 07.11.2016 US 201662418418 P
(43) Date of publication of application: 11.09.2019
(73) Proprietor: CommScope Technologies LLC, Hickory, NC 28602 (US)
(72) Inventor: VAN WUIJCKHUIJSE, Laurens Izaäk, Eden Prairie, Minnesota 55347 (US); STIENSTRA, Pieter, 5627 VD Eindhoven (NL); VAN UDEN, Adrianus Wilhelmus, 5481 VD Schijndel (NL); GEENS, Johan, 3380 Bunsbeek (BE)
(74) Representative: Murgitroyd & Company
(86) International application number: PCT/US2017/060176
(87) International publication number: WO 2018/085767

(56) References cited:
- WO-A2-98/36306
- CN-A- 105 022 341
- JP-A- 2002 311 252
- JP-A- 2002 365 450
- US-A- 5 226 101
- US-A- 5 259 051
- US-A1- 2002 131 719
- US-A1- 2004 213 505
- US-A1- 2013 308 909
- US-A1- 2015 260 927
- US-A1- 2016 041 357
- US-A1- 2016 223 773
- US-A1- 2016 246 011
- US-B2- 6 786 652

## Description

### Cross-Reference to Related Application

This application is being filed on November 6, 2017 as a PCT International Patent Application and claims the benefit of U.S. Patent Application Serial No. 62/418,418, filed on November 7, 2016.

### Background of the Invention

As demand for telecommunications increases, fiber optic networks are being extended in more and more areas. Ease of manufacturing network components is an important concern. As a result, there is a need for systems, methods and devices which address this and other concerns. US 2002/131719 A1 may provide useful background to the present invention.

### Summary

The present invention is set out in the appended set of claims.

### Brief Description of the Drawings

FIG. 1 is a schematic drawing of a portion of an example flexible optical circuit in accordance with the present disclosure.
FIG. 2 is a partial top, rear, perspective view of a flexible optical circuit and a fiber routing machine in accordance with the present disclosure.
FIG. 3 is a partial top, front, perspective view of a further example of a flexible circuit in accordance with the present disclosure.
FIG. 4 illustrates a sectional view of an example ferrule assembly that can be used in conjunction with a flexible circuit in accordance with the principles of the present disclosure.
FIG. 5 is a rear end view of the ferrule assembly of FIG. 4.
FIG. 6 is a sectional view of an example fiber optic cable and connector assembly that can be used in conjunction with a flexible circuit in accordance with the principles of the present disclosure.
FIG. 7 shows an example partial sequence for splicing in accordance with a flexible circuit of the present disclosure.
FIG. 8 shows an example of a further partial sequence for splicing in accordance with a flexible circuit of the present disclosure.
FIG. 9 is a perspective view of an example adapter module that can be used in conjunction with a flexible circuit in accordance with the present disclosure.
FIG. 10 is a flowchart showing an example method of providing a flexible optical circuit in accordance with the present disclosure.
FIG. 11 depicts an embodiment of a flexible substrate that can be used with a flexible optical circuit in accordance with the present disclosure.
FIG. 12 is a perspective view of an example splicing device that can be used for splicing fibers in accordance with the present disclosure.
FIG. 13 is an end view of the splicing device of FIG. 12.
FIG. 14 is a cross-sectional view of the splicing device of FIG. 12.
FIG. 15 is an exploded view of the splicing device of FIG. 12.
FIG. 16 is a schematic depiction of an example process of providing a flexible optical circuit in accordance with one embodiment of the present disclosure.
FIG. 17 is a schematic depiction of an example process of providing a flexible optical circuit in accordance with a further embodiment of the present disclosure.
FIG. 18 is a schematic depiction of an example process of providing a flexible optical circuit in accordance with yet a further embodiment of the present disclosure.

### Detailed Description

The present disclosure is directed generally to flexible fiber optic circuits. In certain exemplary applications, the flexible circuits of the present disclosure are designed to relay multiple fibers which terminate at a rear connector, such as an MPO style connector, positioned at a generally rear portion of the circuit, to a plurality of ferrules positioned at a generally front portion of the circuit. In other examples, the flexible circuits of the present disclosure provide fiber routing between individual fiber connectors, fiber routing between multi-fibered connectors, and fiber routing between individual fiber connectors on one side and one or more multi-fiber connectors on the other side. Non-limiting examples of connectors include MPO style connectors, and single or dual fiber connectors, such as LC or SC type connectors.

Flexible optical circuits are passive optical components that comprise one or more (typically, multiple) optical fibers rigidly supported in a flexible planar substrate, such as a Mylar^{™} or other flexible polymer substrate. Although specific embodiments herein depict and describe planar substrates, it should be appreciated that other substrate configurations, e.g., in which a substrate routes fibers in and/or across multiple planes are also contemplated. Commonly, although not necessarily, one end face of each fiber is disposed adjacent one longitudinal end of the flexible optical circuit substrate and the other end face of each fiber is disposed adjacent the opposite longitudinal end of the flexible optical circuit substrate. The fibers can extend past the end of the flexible substrate so that they can be terminated to optical connectors, which can be coupled to fiber optic cables or other fiber optic components through mating optical connectors.

Supporting the optical fibers on the flexible substrate essentially comprises one or more fibers being routed on the flexible substrate, typically with a needle extending from a robotic arm, and then securing the routed fibers to the flexible substrate with an adhesive, which is allowed to set or cure. In some examples, therefore, the uncured adhesive is pre-applied to the substrate before the fiber routing. Furthermore, in some examples, an additional layer of material can be applied on top of the fibers and the adhesive to affix the fibers. Any suitable material can be used for this purpose. In a non-limiting example, an elastomer such as silicone can be applied on top of the fibers and the adhesive on the substrate. In some examples, the elastomer is cured after application to the substrate; in other examples, the silicone can be pre-cured.

The method of assembly of the flexible optical circuits of the present disclosure provides a number of advantages, which will be discussed in further detail below. For example, by pre-processing the fiber ends before incorporating the fibers into the flexible optical circuit, disadvantages of processing after the flexible circuit is complete can be avoided. For example, it is difficult or impossible to efficiently polish a stepped or staggered configuration of fiber ends for coupling to a correspondingly configured connector or adapter module. In addition, processing fibers and/or ferrules as a group is a cumbersome process requiring specific mechanisms and fixtures to coordinate the simultaneous processing of the multiple fibers or ferrules. Furthermore, when processing groups of fibers or ferrules, if the processing or subsequent testing results in or reveals an inoperable or poorly functioning ferrule/fiber, in some cases the entire group of ferrules/fibers must be scrapped. In contrast, processing of ferrules/fibers individually before integrating them into the flexible optical circuit and/or before integrating all of the fibers into the flexible optical circuit enables the ferrules/fibers to be individually tested following processing, which can help ensure ferrule reliability prior to installation, while reducing waste.

Throughout this disclosure, processing of ferrules and fibers includes any suitable treatment of ferrules or fibers that can be performed to enhance optical transmission, splicing, connectivity, and the like. To ready fiber ends for processing, the fibers are first stripped of their coating layers, and then cleaved. The fiber ends are then cleaned/polished. The cleaning/polishing process is designed to smooth out any imperfections in the fiber face to enhance optical transmission. For fiber stubs having an end supported by a ferrule (as opposed to an unsupported fiber end used for, e.g., splicing to a ferrule-supported fiber stub), processing of the fiber end typically occurs after the fiber end has been terminated at the ferrule, and the ferrule face can polished at the same time. As used herein, a fiber that is terminated at or in a ferrule means that a front end of the fiber is positioned adjacent the front end face of the ferrule. In some examples, processing of the fiber ends includes a mechanical polishing of the fiber ends which can be performed, e.g., with an abrasive slurry and/or abrasive pads. In other examples, cleaning, shaping, re-flowing and other types of processing of the fiber ends is performed by an energy source. Examples of such energy sources include but are not limited to laser treatment, plasma treatment, corona discharge treatment, heat treatment, and electric arc treatment. Different fiber end processing techniques and methods are disclosed in U.S. Patent Application Publication No. 2014/0124140.

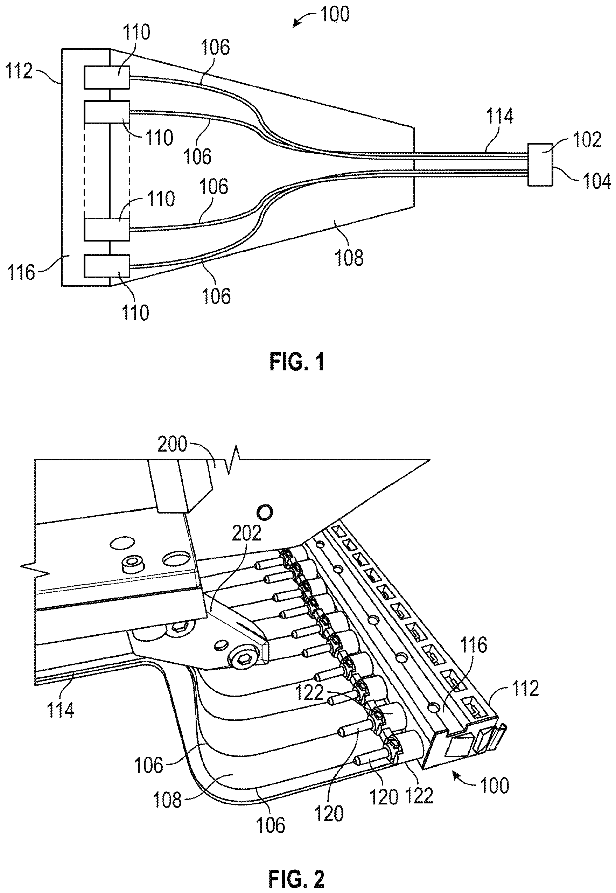

FIG. 1 is a schematic drawing of an example flexible optical circuit 100 in accordance with the present disclosure. The flexible optical circuit 100 includes optical fibers 106 routed on a planar flexible substrate 108 between a rear connector 102 (e.g., an MPO connector) at the rear 104 of the circuit 100 and a plurality of front connectors 110 disposed towards a front end 112 of the circuit 100. In some examples, there are twelve fibers 106 routed from twelve front connectors 110 to a single rear connector 102, the fibers coming together as they approach the rear connector 102 to form a ribbon cable 114, the ribbon cable 114 including twelve individual fibers 106. The front connectors can be conventional connectors (such as an LC or SC connector), or unconventional connectors, that is, connectors that generally have not become a recognizable standard footprint for fiber optic connectivity in the industry.

An adapter module 116 includes a plurality of adapters for mating the front connectors 110 and connecting them to, e.g., other connectors or telecommunications equipment.

In an example method of providing the flexible optical circuit 100 of FIG. 1, front ends of the fibers 106 are pre-processed by one of the processing methods described above. The front ends of the fibers 106 can be individually terminated to ferrules and the ferrules mated to the front connectors 110. Portions of the fibers 106 are routed on the flexible substrate 108 after the fibers are terminated in the ferrules, and the routing of the fibers 106 on the flexible substrate 108 is performed after the fiber ends are processed. Thus ferrules are individually pre-terminated with fiber ends and the fiber ends processed before the fibers are routed on the flexible substrate 108. The pre-installed connector can be any standard or unconventional connector, including but not limited to LC, SC, FC, MU, and ferrule-less connectors (i.e., connectors that do not support ferrules).

To route the fibers on the substrate 108, in some examples the fiber can be laid on the substrate 108 by being passed through a needle controlled by robotics, the robotics being configured to route each fiber along a predefined path on the substrate 108. The robotics can be configured to route each fiber in a single plane or across multiple planes; similarly, separate fibers can be routed in the same or different plane(s) of the substrate as other fibers. As it routes the optical fibers, the needle can be configured to press the optical fibers onto an adhesive layer that has been pre-applied to the substrate 108. In some examples, the fiber is dispensed from a spool and a cutting device disposed at or near the needle end is configured to cut each length of fiber after it has been laid on the substrate so that the next length of fiber can be laid.

As mentioned, in some examples, the routed fibers are secured to the substrate by adhesive. In some examples, the optical fibers pass through the needle onto an uncured adhesive layer on the substrate 108, and then the adhesive and/or an elastomeric or other fiber fixating material applied to the adhesive is allowed to cure to secure the fibers to the substrate 108. The paths and lengths of the individually routed fibers on the substrate can vary from fiber to fiber.

FIG. 2 is a partial perspective view of a flexible circuit 100 and a fiber routing machine 200. The flexible circuit 100 having front end 112 includes the optical fibers 106 routed to a ribbon cable 114 on a flexible substrate 108, as described above, the ribbon cable 114 being a tightly stacked set of twelve individual fibers 106. In addition, in this example front ends of the fibers 106 are terminated in ferrules 120 mated with adapters 122 in an adapter module 116, and the front ends of the fibers 106 are processed before the fibers are routed on the substrate 108. The fiber routing machine 200 includes robotics that move a needle to route the portions of the fibers 106 extending from the rear of the ferrules 120 onto the flexible substrate 108 to form the ribbon cable 114 towards the rear of the flexible circuit 100. The robotics can include one or more systems, (e.g., linear motion systems including one or more drivers) configured to move one or more components of the fiber routing machine to perform the desired fiber routing. For example, the robotics can include a robotic arm 202, and the machinery, controllers and power source needed to move the robotic arm 202 to effect the desired routing of the fibers 106 on the flexible substrate 108. The needle of the fiber routing machine 200 extends from the robotic arm 202 and lays the fibers.

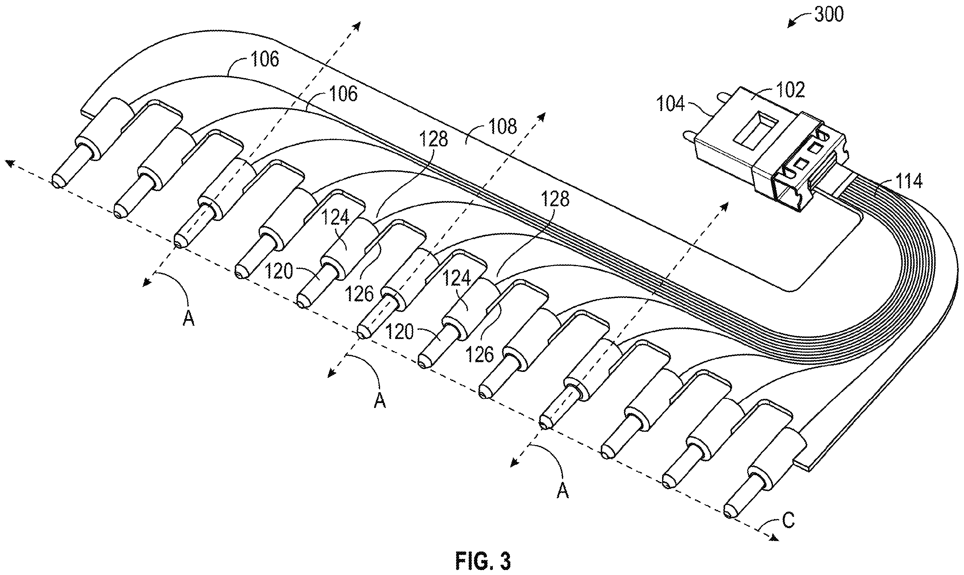

FIG. 3 is a partial perspective view of a further example of a flexible circuit 300, including a rear (MPO) connector 102, a rear end 104, optical fibers 106 with pre-processed ends routed on a flexible substrate 108, ferrules 120, the routed fibers 106 forming a ribbon cable 114 before connecting to the rear connector 102 as discussed above. In this example, the front faces of the ferrules 120 are also processed (e.g., polished) before the ferrules 120 are connected to the substrate 108. In this example, the ferrules 120 include ferrule hubs 124. Each ferrule hub 124 defines a notch or cutout 126 for receiving front portions of front extensions 128 of the flexible substrate 108. The row of ferrules 120 can be mated with connectors as discussed above.

Structural modifications to the examples of flexible circuits shown in FIGS. 1-3, including structural differences in flexible substrate, fiber routing, ribbonization of the fibers, connectorization of the fibers, front connectors, rear connectors, adapters, adapter modules, and the inclusion of fiber optic cassettes or other holders to hold the flexible circuits of FIGS. 1-3 to facilitate the circuits' use with telecommunications equipment may be contemplated in accordance with the disclosures of U.S. Patent Application Publication No. 2015/0253514.

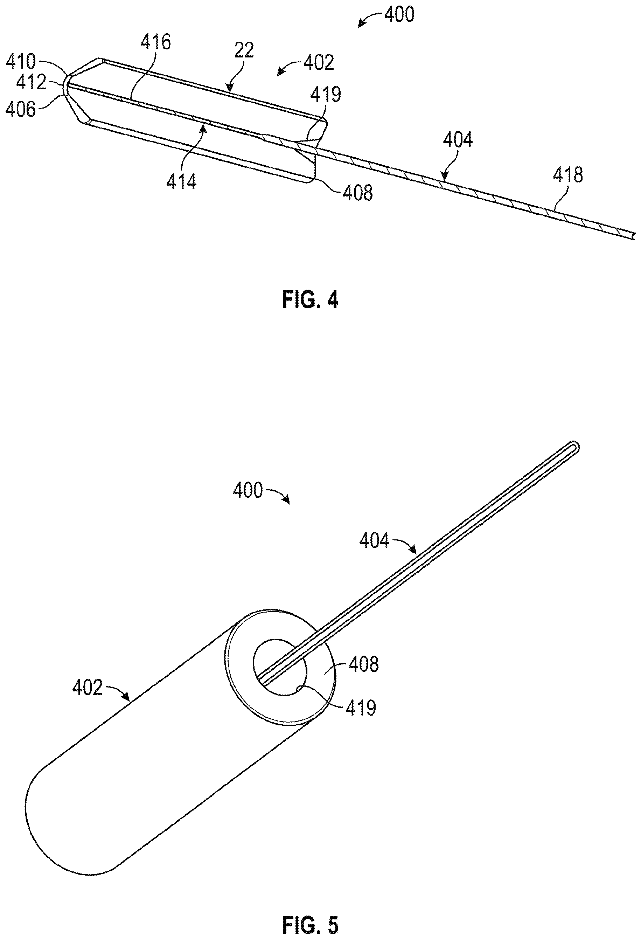

FIG. 4 illustrates a sectional view of a ferrule assembly 400 that can be used in conjunction with the flexible circuit in accordance with the principles of the present disclosure. FIG. 5 is a rear end view of the ferrule assembly 400 of FIG. 4. Referring to FIGS. 4-5, the ferrule assembly 400 includes a ferrule 402 and a first optical fiber segment 404 secured to the ferrule 402. The ferrule 402 includes a front end 406 positioned opposite to a rear end 408. The front end 406 preferably includes an end face 410 at which a processed end 412 of the first optical fiber segment 404 is located, i.e., adjacent to. The ferrule 402 defines a ferrule bore 414 that extends through the ferrule 402 from the front end 406 to the rear end 408. The first optical fiber segment 404 includes a first portion 416 secured within the ferrule bore 414 and a second portion 418 (or stub) that extends rearwardly from the rear end 408 of the ferrule 402. The ferrule bore 414 can include a conical transition 419.

The ferrule 402 is preferably constructed of a relatively hard material capable of protecting and supporting the first portion 416 of the first optical fiber segment 404. In one embodiment, the ferrule 402 has a ceramic construction. In other embodiments, the ferrule 402 can be made of alternative materials such as Ultem^{®}, thermoplastic materials such as Polyphenylene sulfide (PPS), other engineering plastics or various metals.

The first portion 416 of the first optical fiber segment 404 is preferably secured by an adhesive (e.g., epoxy) within the ferrule bore 414 of the ferrule 402.

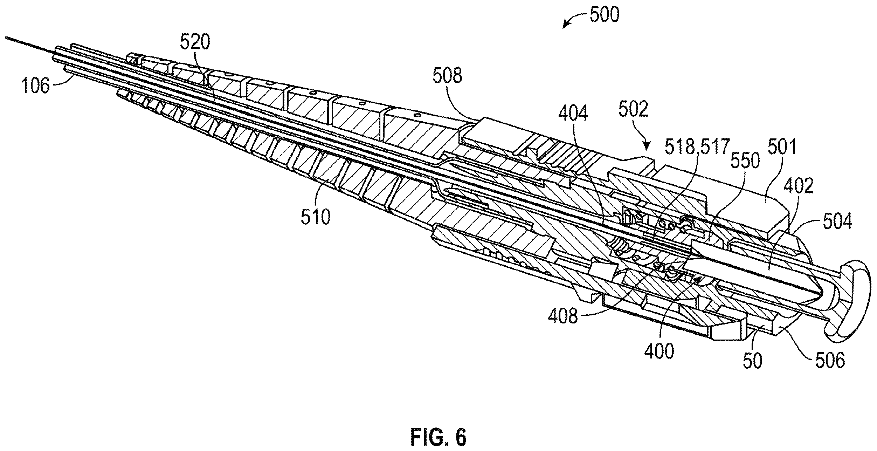

FIG. 6 is a sectional view of an optical fiber 106 as described above, and a connector assembly 500 that can be used in conjunction with a flexible circuit in accordance with the principles of the present disclosure. The connector assembly 500 can include a front connector 110 as described above. In the specific example shown in FIG. 6, the connector assembly 500 includes a fiber optic connector 502 having a connector body 504. The connector body 504 has a front end 506 and a back end 508. A release sleeve 501 is positioned over the connector body 504. The release sleeve 501 can be pulled back relative to the connector body 504 to release the connector from an adapter port. The ferrule assembly 400 described above is positioned at least partially within the connector body 504. Specifically, the ferrule assembly 400 is positioned with the ferrule 402 positioned adjacent to the front end 506 of the connector body 504. The fiber optic connector 502 further includes a boot 510 mounted adjacent the back end 508 of the connector body 504. As used herein, the word "adjacent" means at or near and includes situations where the optical fiber protrudes beyond the end face of the ferrule. In some examples, the connector 502 is compatible with existing connectors, fiber optic adapters, patch panels and fiber optic cables.

The fiber optic cable and connector assembly 500 further includes the optical fiber 106 that extends through the boot 510. The optical fiber 106 includes the first optical fiber segment 404 discussed above and a second optical fiber segment 520. The first optical fiber segment 404 and the second optical fiber segment 520 are optically connected to each other at a splice 517 (e.g., a fusion splice or a mechanical splice). The splice 517 is positioned at a splice location 518, at the rear end of the second portion 418 of the first optical fiber segment 404 and the front of the second optical fiber segment 520, spaced from the rear end 408 (i.e., the base) of the ferrule 402. In the example shown, the splice location 518 is within the connector body 504. In some examples, the splice 517 is a factory fusion splice. A "factory fusion splice" is a splice performed at a manufacturing facility as part of a manufacturing process. In other examples, the splice can be a field splice.

In accordance with the embodiments of the present disclosure, at least the front end of the first optical fiber segment 404 is processed before (i.e., pre-processed) the second optical fiber segment 520 (which extends rearward beyond the connector assembly 500) is routed on a flexible substrate of a flexible circuit. In accordance with embodiments of the present disclosure, the splice 517 can be performed before or after the second optical fiber segment is routed on a flexible substrate of a flexible circuit.

It will be appreciated that different connector assembly styles and arrangements can be used. In certain examples, simplified versions of the connector can be used where various components of the connector can be eliminated (e.g., the boot, the outer release sleeve, etc.)

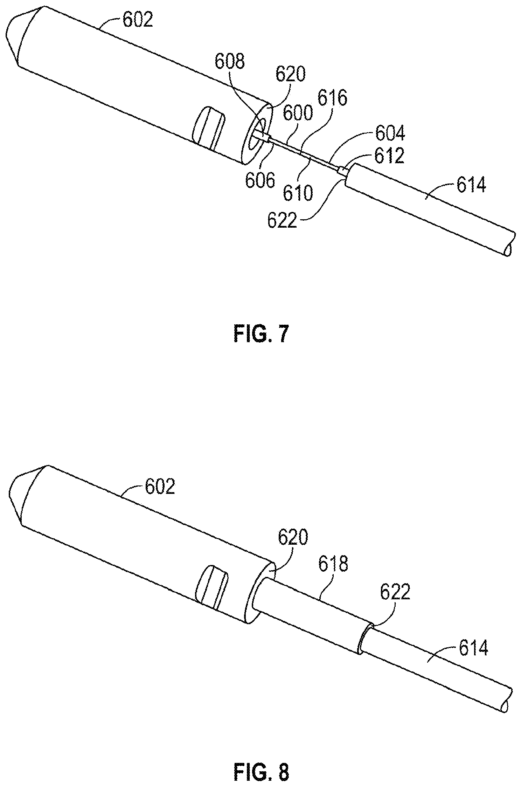

FIGS. 7-8 show an example partial sequence for splicing in accordance with a flexible circuit of the present disclosure. The following splicing sequence could be applied, e.g., to any of the fibers 106 described above, and could be performed before or after the optical fibers are routed on the flexible substrate of the flexible circuit. Thus, in some examples, the fibers 106 described above can include both the first optical fiber segment 600 and the second optical fiber segment 604 as described below. In some examples the splice is supported on the flexible substrate 108, that is, the portion of the fiber or fibers 106 containing the splice is secured on the flexible substrate. In other examples, the splice is not supported on the flexible substrate 108; that is, the splice could be positioned, e.g., forward of a forward edge or rearward of a rearward edge of the flexible substrate 108. Typically, when the splice is positioned forward of the flexible substrate, the splice is performed between a relatively short first optical fiber segment 600 and a relatively long second optical fiber segment 604. This example is described in more detail below.

As shown in FIGS. 7-8, a pre-processed first optical fiber segment 600 is terminated at a ferrule 602 and spliced to a second optical fiber segment 604 of a fiber optic cable. The pre-processed first optical fiber segment 600 includes a bare fiber portion 606 and a coated fiber portion 608. The second optical fiber segment 604 optionally includes a bare fiber portion 610 and a coated fiber portion 612. Portions or the entirety of one or both of the bare fiber portion 610 and the coated fiber portion 612 can be routed on a flexible substrate. The fiber optic cable may optionally also include a buffer tube 614 that surrounds the coated portion 612 of the second optical fiber segment 604. The second optical fiber segment 604 is coaxially aligned with the pre-processed first optical fiber segment 600 in preparation for splicing, and then spliced at the splice location 616. In this example splicing procedure, an optional protective layer 618 (FIG. 8) is over molded or otherwise applied over the splice location 616 (FIG. 7) between the second optical fiber segment 604 and the bare fiber portion 606 of the first optical fiber segment 600. The protective layer 618 extends from a rearward end 620 of the ferrule 602 to a forward end 622 of the buffer tube 614.

Following the splicing procedure, in some examples, a ferrule hub 550 (FIG. 6) is optionally secured over the rear end 620 of the ferrule 602. In some examples, as shown in FIG. 6, the hub 550 also covers the splice location (518, 616) such that the splice 517 is located within the hub 550. In certain embodiments, the hub 550 has a polymeric construction that has been over molded over the rear end 620 of the ferrule 602 and over the splice location (518, 616). By protecting the fusion splice 517 within the hub 550 at a location in close proximity to the ferrule 602, it is possible to manufacture a fiber optic connector that is relatively short in length.

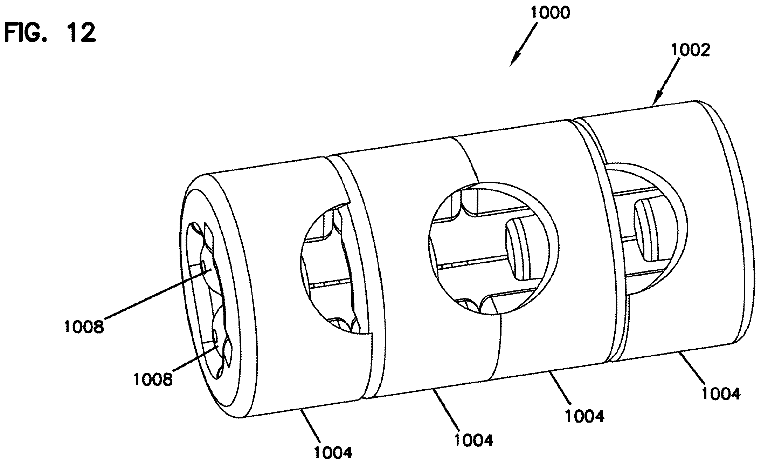

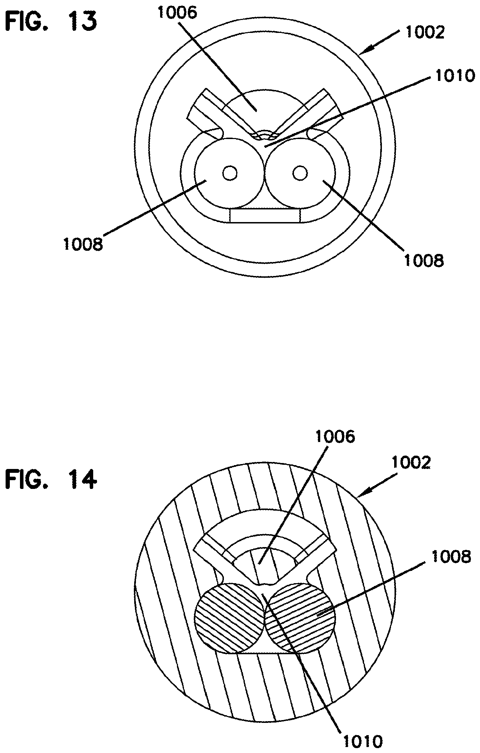

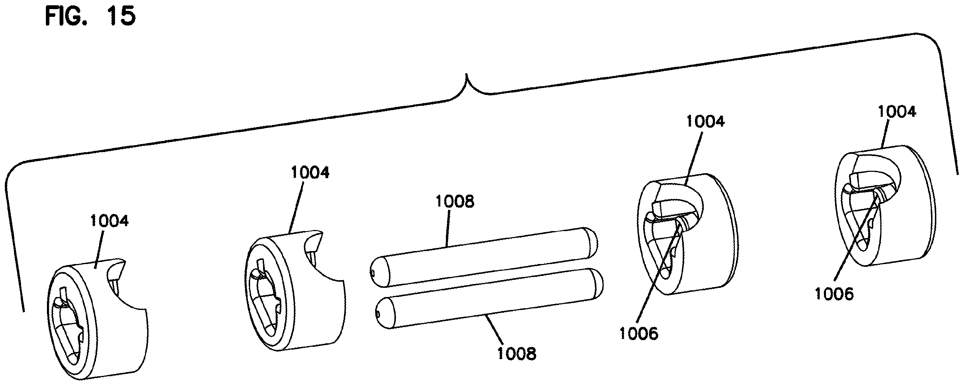

FIGS. 12-15 show an example mechanical splicing device 1000 that can be used to perform an alternative mechanical splicing procedure that can be used to splice ends of first and second fiber segments (e.g., the fiber segments 600 and 604 in FIG. 7) in accordance with the principles of the present disclosure. The mechanical splicing device 1000 includes a splice housing 1002 formed by a plurality of housing segments 1004 that are connected end-to-end. Each of the housing segments 1004 includes at least one flexible cantilever arm 1006 having a base end that is unitarily formed with a main body of its corresponding housing segment 1004. Alignment rods 1008 are mounted within the splice housing 1002. The alignment rods 1008 define a fiber alignment groove 1010 in which the optical fiber segments (e.g., optical fiber segments 600 and 604) are received co-axially with each other to form the optical fiber 106. Free ends of the cantilever arms 1006 are adapted to press the optical fibers into the fiber alignment groove 1010. The splice housing 1002 can also be filled with adhesive for encapsulating the optical fiber segments to anchor the fiber ends within the housing 1002.

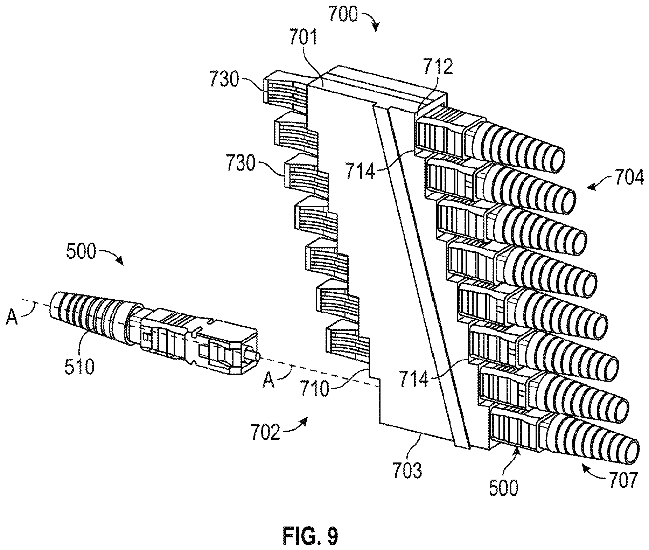

FIG. 9 is a perspective view of an example adapter module 700 that can be used in conjunction with a flexible circuit as disclosed herein. The adapter module 700 can be removably mountable for connection with telecommunications equipment. Thus, in some examples, the adapter module 700 is removably mountable to a wall or chassis in proximity to telecommunications equipment.

The adapter module 700, having a top 701 and a bottom 703, can be the adapter module 116 of FIG. 1. The adapter module 700 has a front 702 and a back 704. The front 702 can correspond to the front 112 of the flexible circuit of FIG. 1. A first series 707 of connector assemblies 500 is insertable and removable from the rear 704 into the rear receptacles of adapters housed in the adapter module 700. In this example, the first series 707 of connectors includes up to eight connectors, as the adapter module 700 houses eight adapters. The first series of connector assemblies 500 can correspond to the front connectors 110 of FIG. 1. It can be contemplated how the adapter module 700 can house more or fewer adapters and thereby accommodate more or fewer connector assemblies 500. The first series 707 of connector assemblies is adapted to optionally couple with a second series of fiber optic connectors 500 inserted into adapter ports at the front 702 of the adapter module. The connector assemblies are inserted and removed axially into the adapter ports, i.e., along a longitudinal ferrule fiber axis A. Dust plugs 730 that protect the adapters housed within the adapter module 700 can be removed prior to installing the connector assemblies 500.

The adapter module includes forward and rearward receptacles (e.g., adapter ports) for receiving the fiber optic connectors. The forward receptacles and rearward receptacles of the adapters are positioned relative to each other such that the front face of the ferrule of a connector of the first series of connectors that is installed in the rearward receptacle is optically coupled to the corresponding front face of the ferrule of a connector of the second series of connectors that is installed in the forward receptacle of the adapter.

As shown in FIG. 9, the example adapter module 700 has a stepped configuration. Each of the front 702 and the back 704 of the adapter module 700 has a stepped facade. The stepped facade 710 of the front 702 faces forwards, while the stepped facade 712 on the rear 704 faces rearwards. Due to the stepped nature of the facades (710, 712), the axial distance by which a first installed connector of the first series of connectors extends rearwardly relative to its own respective step 714 of the stepped facade 712 differs from the axial distance by which that first installed connector of the first series of connectors extends rearwardly relative to another step of the 714 stepped facade 712. Likewise, the axial distance by which a first installed connector of the second series 706 of connectors extends forwardly relative to its own respective step 714 of the stepped facade 710 differs from the axial distance by which that first installed connector of the first series of connectors extends forwardly relative to another step 714 of the stepped facade 710. With this definition of "stepped," numerous other configurations can be contemplated beyond the example shown in FIG. 9 of stepped adapter modules in which a line that is perpendicular to the fiber axes and with which all of the fiber axes intersect, coincides with the back end 709 of at least a first connector but does not coincide with the back end 709 of at least a second connector in the same series of connectors as the first connector. An example adapter module of this type can be found at PCT Publication No. WO2010/059623.

Referring again to FIG. 3, if the flexible substrate 108 were modified so that the ferrules 120 could be installed in a series of connectors compatible with an adapter module having a stepped configuration (e.g., the adapter module 700 of FIG. 9), the free ends of the ferrules 120 would not align as they do in FIG. 3 along the line C that is perpendicular fiber axes and intersects each of the ends of the ferrules 120. Thus, were the flexible substrate 108 in FIG. 3 modified for a stepped adapter module, it would be difficult or impossible to process the front ends of the optical fibers once the fibers were routed on the flexible substrate 108. Thus, to overcome this problem, in accordance with the present disclosure ferrule faces and their respective fiber ends are processed before routing the fibers on the flexible substrate of the flexible circuit.

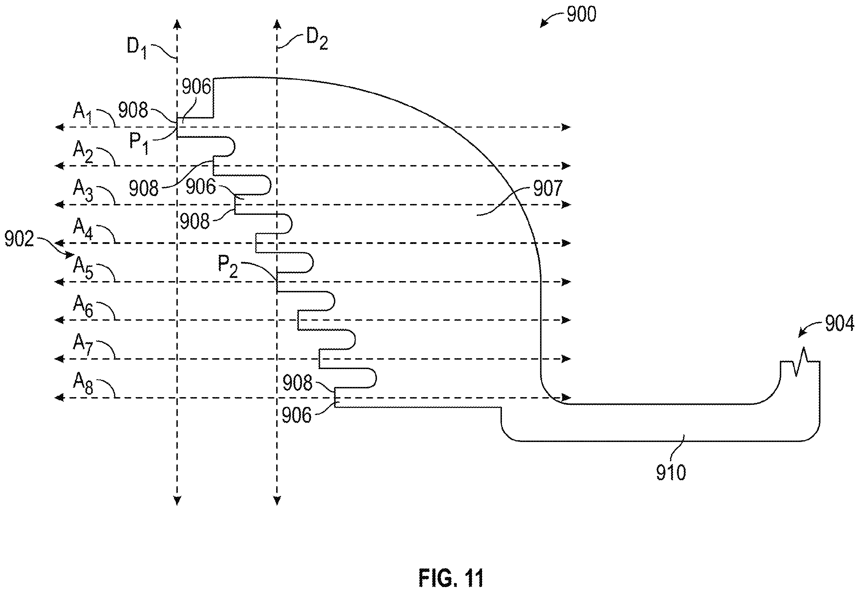

An example of such a modified flexible substrate 900 in accordance with the present disclosure is illustrated in FIG. 11. The flexible substrate 900 includes a front 902 and a back 904 and front extension 906. In this example, the flexible substrate 900 includes eight front extensions 906, but it should be appreciated that more or fewer front extensions can be provided. The flexible substrate 900 can be used, for example, to route fibers from the first or second series of connector assemblies 500 housed in the adapter module 700 of FIG. 9. Referring again to FIG. 11, each of the front extensions 906 is configured to support a ferrule as described above in connection with FIG. 3. Each of the front extensions 906 has a front end 908, the front extension 906 extending forwardly from a main portion 907 of the flexible substrate 900. Fibers terminated at the ferrules can be routed on the flexible substrate 900 into a ribbon cable in the narrowed region 910 of the flexible substrate 900, as discussed above. Although ferrules are not shown in FIG. 11, the fiber axes Ai-As of such ferrules are depicted. The front extensions 906 are in a stepped configuration. More specifically, as shown in FIG. 11, a line, such as a line Di or a line D₂, which intersects the fiber axes Ai-As and is perpendicular to the fiber axes Ai-As coincides (e.g., at points P₁ or P₂) with the front end 908 of at least one, but fewer than all, of the of the front extensions 906.

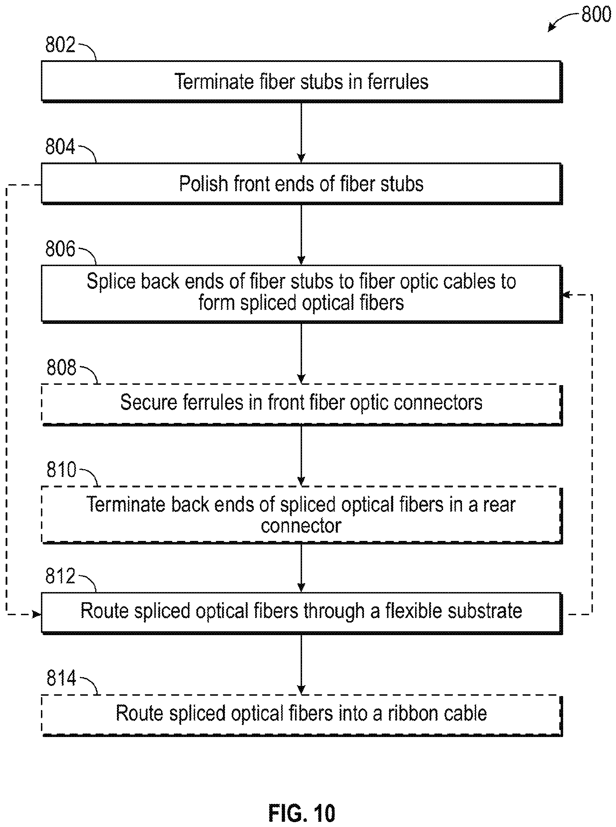

FIG. 10 is a flowchart showing an example method 800 of providing a flexible optical circuit in accordance with the present disclosure, the flexible optical circuit having a front end and a rear end. It should be appreciated that the enumerated steps of the method 800 can be performed in any suitable order consistent with the appended claims except where otherwise indicated.

In a step 802, each of the plurality of fibers is terminated in one of the ferrules, each of the ferrules having a front face configured to optically connect the pre-processed front end of the fiber to another optical fiber segment.

In a step 804, each of a plurality of fiber ends is processed, e.g., polished mechanically or using an energy source.

In an optional step 806, one or more of the fibers is spliced to form spliced optical fibers.

In an optional step 808, one or more of the ferrules are secured in front fiber optic connectors of the flexible optical circuit.

In an optional step 810, back ends of one or more of the spliced optical fibers are terminated in at least one rear connector of the flexible optical circuit.

In a step 812 that is subsequent at least to the step 802, and subsequent to or preceding the step 804 and subsequent to or preceding one or both of optional steps 806 and 808, at least a portion of each of the spliced optical fibers is routed on a flexible substrate.

In an optional step 814, the routing of step 812 includes routing the fibers or spliced optical fibers into a ribbon cable.

In some examples, the spliced optical fibers are terminated in the rear connector as a ribbon cable.

In some examples, the step 806 is performed before the step 812, and splices formed during the step 806 are supported on the flexible substrate. In other examples, splices formed during the step 806 are not supported on the flexible substrate. In some examples, the back ends of the fibers terminated at the ferrules do not reach a front end of the flexible substrate. In other examples the back ends of the fibers terminated at the ferrules are supported on the flexible substrate. In some examples the back ends of the fibers terminated at the ferrules are positioned beyond a back end of the flexible substrate. In some examples, the front faces of the ferrules are positioned such that a line that intersects a fiber axis of each of the ferrules and is perpendicular to the fiber axis of each of the ferrules coincides with at least one, but fewer than all, of the front faces of the ferrules.

In certain examples, splicing can be eliminated and an un-spliced stub fiber from the ferrule can be routed on the substrate after the end of the fiber has been processed.

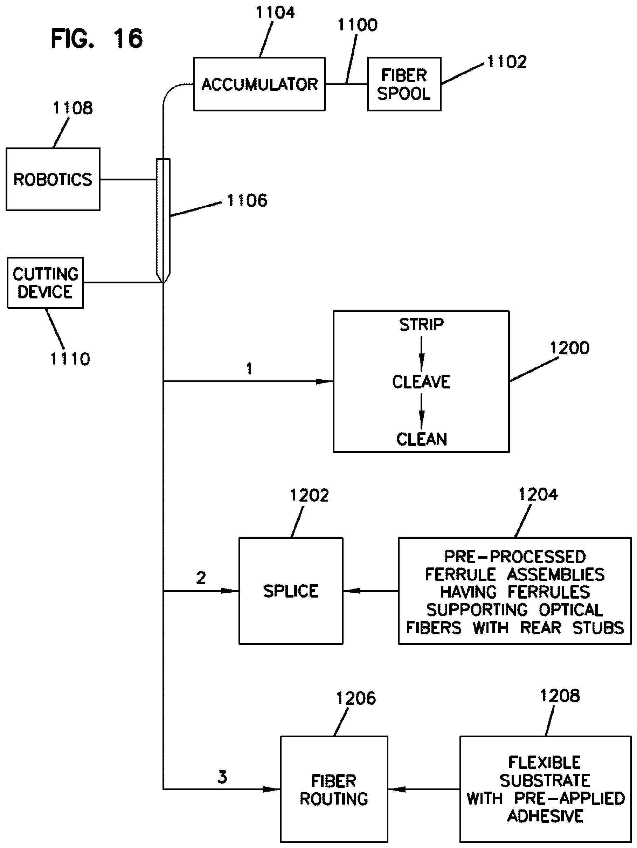

FIG. 16 is a schematic depiction of an example process of providing a flexible optical circuit in accordance with one embodiment of the present disclosure. According to the embodiment of FIG. 16, optical fiber 1100 is dispensed from a spool 1102 and passes through an accumulator 1104, which enables fiber to be dispensed and routed without continuously turning the spool 1102. The fiber 1100 passes through a needle 1106. The needle 1106 moves via robotics 1108.

A front end of a first length of the fiber 1100 is processed by a processing device 1200 that strips one or more outer layers from the fiber, cleaves the exposed bare fiber, and cleans/polishes the end face of the exposed bare fiber.

Subsequent to the stripping, cleaving and stripping, a stripped, cleaved and cleaned front fiber end is introduced to a splicing device 1202, such as a mechanical splicing device or a fusion splicing device. In this embodiment, the splicing device 1202 splices the stripped, cleaved and cleaned front fiber end (i.e., the front of a first fiber segment) to the rear end of a fiber stub (i.e., a second fiber segment) extending from a pre-processed ferrule assembly 1204 (which includes a ferrule whose fiber stub end adjacent the ferrule face has been polished or otherwise processed).

Subsequent to the splicing, the needle 1106 performs a fiber routing operation 1206 along a predefined (e.g., pre-programmed) path on a flexible substrate 1208 having a pre-applied adhesive thereon. When the routing of the first fiber length is complete, the cutting device 1110 severs the routed fiber creating a back end to the first length of fiber and a new front end for a subsequent second length of fiber, and the process starts over to process and route the second length of fiber. It should be appreciated that this process can be repeated many times on a single flexible substrate and/or on multiple flexible substrates.

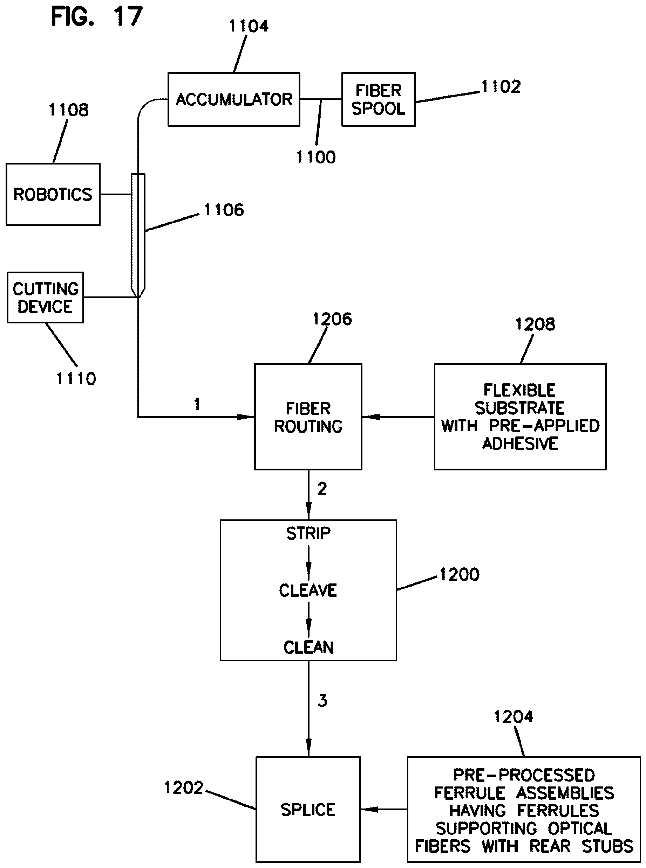

FIG. 17 is a schematic depiction of an example process of providing a flexible optical circuit in accordance with a further embodiment of the present disclosure. According to the embodiment of FIG. 17, optical fiber 1100 is dispensed from a spool 1102 and passes through an accumulator 1104, which enables fiber to be dispensed and routed without continuously turning the spool 1102. The fiber 1100 passes through a needle 1106. The needle 1106 moves via robotics 1108.

Unlike the embodiment in FIG. 16, in FIG. 17, the needle 1106 first performs the fiber routing 1206 of a first fiber length along a predefined (e.g., pre-programmed) path on a flexible substrate 1208 having a pre-applied adhesive thereon. When the routing of the first fiber length is complete, the cutting device 1110 severs the routed fiber creating a back end to the first length of fiber and a new front end for a subsequent second length of fiber. At this point, the back end and/or the front end of the first length of fiber 1100 is processed by a processing device 1200 that strips one or more outer layers from the fiber, cleaves the exposed bare fiber, and cleans/polishes the end face of the exposed bare fiber. At this point, the stripped, cleaved and cleaned front and/or back fiber end is introduced to a splicing device 1202, such as a mechanical splicing device or a fusion splicing device. The splicing device 1202 splices the stripped, cleaved and cleaned front and/or back fiber end to the opposite end of a fiber stub extending from a pre-processed ferrule assembly 1204 (that includes a ferrule whose fiber stub end adjacent the ferrule face has been polished or otherwise processed). The same process can be performed for each of any number of subsequent fiber lengths. In some examples, the routing of a subsequent fiber length is performed while a prior fiber length is being processed and/or spliced.

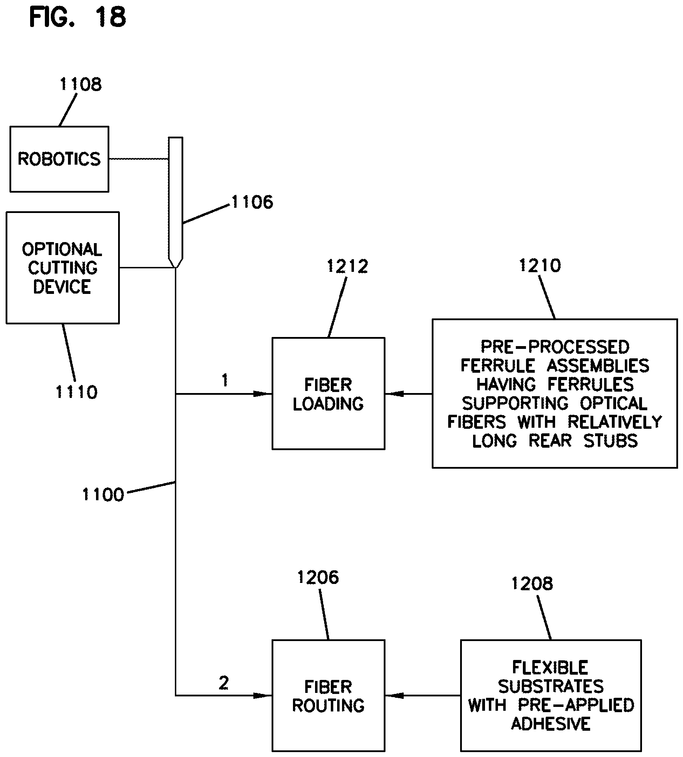

FIG. 18 is a schematic depiction of an example process of providing a flexible optical circuit in accordance with yet a further embodiment of the present disclosure. In this example, in a loading operation 1212 (which can be performed, e.g., by a loading device), a pre-processed ferrule assembly 1210 is loaded into the needle 1106 which is moved by the robotics 1108. The pre-processed ferrule assembly 1210 includes a ferrule supporting a fiber stub. The front end of the fiber stub is positioned adjacent the ferrule face, and has been polished or otherwise processed prior to the loading operation. In one example, the loading operation can include a vacuum system that draws a fiber stub into the needle. In this example, the fiber stub is relatively long. The fiber stub can be pre-cut or optionally cut by the cutting device 1110 to form a rear end of the fiber stub. In the routing operation 1206, which is performed after the loading operation 1212, the relatively long fiber stub is long enough to be routed by the needle 1106 on the flexible substrate 1208 having pre-applied adhesive without the need for a splice. That is, the fiber stub that is supported in the pre-processed ferrule assembly is long enough to achieve a complete single fiber routing on the flexible substrate without a splice. After the first relatively long fiber stub is routed, the process depicted in FIG. 18 can be repeated for subsequent fiber routings on the same or different flexible substrates 1208.

In certain examples, the fiber stubs can all have a pre-defined length that is as long as or longer than the longest fiber routing path needed for the flexible circuit. For this example, the fiber stubs can be cut to length by the cutting device. In other examples, the fiber stubs can be pre-cut to different lengths corresponding to different fiber routing path lengths. For this example, a fiber stub having a length equal to the desired fiber routing path would be selected and loaded into the needle thereby eliminating the need for subsequent cutting.

Although in the foregoing description, terms such as "top," "bottom," "front," and "back"/"rear" were used for ease of description and illustration, no restriction is intended by such use of the terms. The flexible optical circuits described herein can be used in any orientation, depending upon the desired application.

Having described the preferred aspects and embodiments of the present disclosure, modifications of the disclosed concepts may readily occur to one skilled in the art. However, it is intended that such modifications be included within the scope of the claims which are appended hereto.

## Claims

1. A method (800) of making a flexible optical circuit device (100), comprising:
(a) terminating (802) front ends of optical fibers (106, 404) in ferrules (120, 402) and securing the optical fibers to the ferrules to provide ferrule assemblies (400, 1210) of the ferrules (120, 402) and the optical fibers (106, 404), such that the front ends (412) of the fibers are positioned adjacent to front end faces (410) of the ferrules (120, 402), the ferrule assemblies (400, 1210) including stub portions (418) of the optical fibers (106, 404) that extend rearwardly from the ferrules (120, 402);
(b) subsequent to (a), processing (804) the front ends (412) of the optical fibers (106, 404) by either mechanically polishing the front ends of the optical fibers or applying an energy source, wherein the energy source includes a laser or a plasma, to the front ends of the optical fibers; **characterized in that** the method further comprises:
(c) subsequent to (b), routing (812, 1206) and securing the stub portions (418) of the optical fibers (106, 404) of the ferrule assemblies (400, 1210) on a flexible planar substrate (108, 1208).

2. The method of claim 1, wherein the processing (804) includes mechanically polishing the front ends of the optical fibers.

3. The method of claim 1, wherein the processing (804) includes applying an energy source, wherein the energy source includes a laser or plasma, to the front ends of the optical fibers.

4. The method as in any of claims 1-3, wherein the optical fibers (404) include optical fiber segments (520) spliced to the rear ends of the stub portions (418).

5. The method of claim 4, wherein the optical fiber segments (520) are fusion spliced or mechanically spliced to the rear ends of the stub portions (418).

6. The method of claim 1, wherein each of the stub portions (418) is routed on the substrate using robotics (1108) and is secured to the substrate by adhesive, the adhesive including an adhesive layer pre-applied on the substrate, wherein the stub portions (418) are applied to the substrate by a routing needle (1106) moved by the robotics (1108).

7. The method of claim 6, further comprising applying a layer of an elastomer to the flexible substrate (108, 1208), wherein the elastomer is cured after the stub portions (418) have been routed on the substrate (108, 1208).

8. The method of claim 1, further comprising:
(d) assembling, prior to (c), the ferrules (120, 402) in connector bodies (110, 504).

9. The method of any of claims 4-5, wherein the optical fiber segments (520) are spliced to the rear ends of the stub portions (418) at splices before the routing and securing of the stub portions (418).

10. The method of claim 9, wherein the splices are supported on the flexible substrate (108, 1208).

11. The method of claim 9, wherein the splices are not supported on the flexible substrate (108, 1208).

## Patentansprüche

1. Verfahren (800) zum Herstellen einer flexiblen Lichtwellenleiterschaltungsvorrichtung (100), umfassend:
(a) Abschließen (802) von Vorderenden von Lichtwellenleitern (106, 404) in Endhülsen (120, 402) und Befestigen der Lichtwellenleiter an den Endhülsen, um Endhülsenanordnungen (400, 1210) der Endhülsen (120, 402) und der Lichtwellenleiter (106, 404) bereitzustellen, sodass die Vorderenden (412) der Lichtwellenleiter benachbart zu Vorderendflächen (410) der Endhülsen (120, 402) angeordnet sind, wobei die Endhülsenanordnungen (400, 1210) Stummelabschnitte (418) der Lichtwellenleiter (106, 404) umfassen, die sich von den Endhülsen (120, 402) nach hinten erstrecken;
(b) anschließend an (a), Verarbeiten (804) der Vorderenden (412) der Lichtwellenleiter (106, 404) durch entweder mechanisches Polieren der Vorderenden der Lichtwellenleiter oder Anwenden einer Energiequelle auf die Vorderenden der Lichtwellenleiter, wobei die Energiequelle einen Laser oder ein Plasma umfasst; **dadurch gekennzeichnet, dass** das Verfahren ferner umfasst:
(c) anschließend an (b), Führen (812, 1206) und Befestigen der Stummelabschnitte (418) der Lichtwellenleiter (106, 404) der Endhülsenanordnungen (400, 1210) auf einem flexiblen planaren Substrat (108, 1208).

2. Verfahren nach Anspruch 1, wobei das Verarbeiten (804) das mechanische Polieren der Vorderenden der Lichtwellenleiter umfasst.

3. Verfahren nach Anspruch 1, wobei das Verarbeiten (804) das Anwenden einer Energiequelle auf die Vorderenden der Lichtwellenleiter umfasst, wobei die Energiequelle einen Laser oder Plasma umfasst.

4. Verfahren nach einem der Ansprüche 1 bis 3, wobei die Lichtwellenleiter (404) Lichtwellenleitersegmente (520) umfassen, die an die Hinterenden der Stummelabschnitte (418) gespleißt werden.

5. Verfahren nach Anspruch 4, wobei die Lichtwellenleitersegmente (520) an die Hinterenden der Stummelabschnitte (418) schmelzgespleißt oder mechanisch gespleißt werden.

6. Verfahren nach Anspruch 1, wobei jeder der Stummelabschnitte (418) auf dem Substrat unter Verwendung von Robotik (1108) geführt und mittels Haftmittel an dem Substrat befestigt wird, wobei das Haftmittel eine auf dem Substrat vorab aufgebrachte Haftmittelschicht umfasst, wobei die Stummelabschnitte (418) auf das Substrat durch eine Führungsnadel (1106) aufgebracht werden, die durch die Robotik (1108) bewegt wird.

7. Verfahren nach Anspruch 6, ferner umfassend das Aufbringen einer Schicht eines Elastomers auf das flexible Substrat (108, 1208), wobei das Elastomer gehärtet wird, nachdem die Stummelabschnitte (418) auf dem Substrat (108, 1208) geführt wurden.

8. Verfahren nach Anspruch 1, ferner umfassend:
(d) vor (c), Zusammenfügen der Endhülsen (120, 402) in Verbinderkörpern (110, 504).

9. Verfahren nach einem der Ansprüche 4 bis 5, wobei die Lichtwellenleitersegmente (520) vor dem Führen und Befestigen der Stummelabschnitte (418) an Spleißstellen an die Hinterenden der Stummelabschnitte (418) gespleißt werden.

10. Verfahren nach Anspruch 9, wobei die Spleiße auf dem flexiblen Substrat (108, 1208) getragen werden.

11. Verfahren nach Anspruch 9, wobei die Spleiße nicht auf dem flexiblen Substrat (108, 1208) getragen werden.

## Revendications

1. Procédé (800) de fabrication d'un dispositif de circuit optique flexible (100), comprenant :
(a) la terminaison (802) des extrémités avant de fibres optiques (106, 404) dans des ferrules (120, 402) et la fixation des fibres optiques aux ferrules pour fournir des ensembles de ferrules (400, 1210) des ferrules (120, 402) et des fibres optiques (106, 404), de sorte que les extrémités avant (412) des fibres soient positionnées de manière adjacente aux faces d'extrémité avant (410) des ferrules (120, 402), les ensembles de ferrules (400, 1210) comprenant des parties de tronçon (418) des fibres optiques (106, 404) qui s'étendent vers l'arrière à partir des ferrules (120, 402) ;
(b) à la suite de (a), le traitement (804) des extrémités avant (412) des fibres optiques (106, 404) soit par polissage mécanique des extrémités avant des fibres optiques, soit par application d'une source d'énergie, dans laquelle la source d'énergie comprend un laser ou un plasma, aux extrémités avant des fibres optiques ; **caractérisé en ce que** le procédé comprend en outre :
(c) à la suite de (b), l'acheminement (812, 1206) et la fixation des parties de tronçon (418) des fibres optiques (106, 404) des ensembles de ferrules (400, 1210) sur un substrat plan flexible (108, 1208).

2. Procédé selon la revendication 1, dans lequel le traitement (804) comprend le polissage mécanique des extrémités avant des fibres optiques.

3. Procédé selon la revendication 1, dans lequel le traitement (804) comprend l'application d'une source d'énergie, dans lequel la source d'énergie comprend un laser ou un plasma, aux extrémités avant des fibres optiques.

4. Procédé selon l'une quelconque des revendications 1 à 3, dans lequel les fibres optiques (404) comprennent des segments de fibre optique (520) épissés aux extrémités arrière des parties de tronçon (418).

5. Procédé selon la revendication 4, dans lequel les segments de fibre optique (520) sont épissés par fusion ou épissés mécaniquement aux extrémités arrière des parties de tronçon (418) .

6. Procédé selon la revendication 1, dans lequel chacune parmi les parties de tronçon (418) est acheminée sur le substrat à l'aide d'un robot (1108) et est fixée au substrat par un adhésif, l'adhésif comprenant une couche adhésive pré-appliquée sur le substrat, dans lequel les parties de tronçon (418) sont appliquées au substrat par une aiguille d'acheminement (1106) déplacée par le robot (1108).

7. Procédé selon la revendication 6, comprenant en outre l'application d'une couche d'un élastomère sur le substrat flexible (108, 1208), dans lequel l'élastomère est durci après que les parties de tronçon (418) ont été acheminées sur le substrat (108, 1208).

8. Procédé selon la revendication 1, comprenant en outre :
(d) l'assemblage, avant (c), des ferrules (120, 402) dans des corps de connecteur (110, 504).

9. Procédé selon l'une quelconque des revendications 4 à 5, dans lequel les segments de fibre optique (520) sont épissés aux extrémités arrière des parties de tronçon (418) au niveau des épissures avant l'acheminement et la fixation des parties de tronçon (418).

10. Procédé selon la revendication 9, dans lequel les épissures sont supportées sur le substrat flexible (108, 1208).

11. Procédé selon la revendication 9, dans lequel les épissures ne sont pas supportées sur le substrat flexible (108, 1208).
